# EUROPÄISCHE PATENTSCHRIFT

(11) **EP 2 635 390 B1**
(45) Veröffentlichungstag und Bekanntmachung des Hinweises auf die Patenterteilung: **13.08.2014**
(21) Anmeldenummer: 11778834.9
(22) Anmeldetag: 26.10.2011
(51) Int. Cl.: B21D 53/26, F04F 13/00, F02B 33/42

(54) **VERFAHREN ZUR HERSTELLUNG EINES ZELLENRADES**
METHOD FOR PRODUCING A CELLULAR WHEEL
PROCÉDÉ DE FABRICATION D'UNE ROUE CELLULAIRE

(30) Priorität: 03.11.2010 EP 10189873
(43) Veröffentlichungstag der Anmeldung: 11.09.2013
(73) Patentinhaber: MEC Lasertec AG, 5733 Leimbach (CH)
(72) Erfinder: MERZ, Karl, CH-5734 Reinach (CH)
(74) Vertreter: Frischknecht, Harry Ralph
(86) Internationale Anmeldenummer: PCT/EP2011/068713
(87) Internationale Veröffentlichungsnummer: WO 2012/059372

(56) Entgegenhaltungen:
- WO-A1-2010/057319
- DE-C- 937 407
- GB-A- 1 076 235

## Beschreibung

### TECHNISCHES GEBIET

Die vorliegende Erfindung betrifft ein Verfahren zur Herstellung eines Zellenrades aus Metall, mit konzentrisch zu einer Rotationsachse liegenden Hülsen und zwischen aufeinanderfolgenden Hülsen angeordneten, radial zur Rotationsachse ausgerichteten Lamellen, die mit einer Endkante mit einer Hülse gefügt sind und vor dem Fügen der freien Endkanten mit einer nachfolgenden Hülse in ihrer Winkellage fixiert werden.

### STAND DER TECHNIK

Seit einigen Jahren zählt das Verfahren des Downsizing zu den Hauptthemen bei der Konstruktion von neuen, aufgeladenen Motoren. Mit Downsizing können der Kraftstoffverbrauch und damit die Abgasemissionen eines Fahrzeugs reduziert werden. In der heutigen Zeit werden diese Ziele immer wichtiger, da der hohe Energieverbrauch durch fossile Brennstoffe stark zur Luftverschmutzung beiträgt und immer härtere Gesetzgebungsmassnahmen die Automobilhersteller zum Handeln zwingen. Unter Downsizing versteht man die Substitution eines grossvolumigen Motors durch einen hubraumverkleinerten Motor. Dabei soll die Motorleistung durch Aufladung des Motor konstant gehalten werden. Das Ziel ist es, mit kleinvolumigen Motoren die gleichen Leistungswerte zu erreichen wie mit leistungsgleichen Saugmotoren. Neue Erkenntnisse auf dem Gebiet des Downsizing haben gezeigt, dass insbesondere bei sehr kleinen Ottomotoren mit einem Hubraum von 1 Liter oder weniger mit einer Druckwellenaufladung die besten Ergebnisse erzielt werden können.

Bei einem Druckwellenlader ist der Rotor als Zellenrad ausgebildet und wird von einem Luft- und Abgasgehäuse mit einem gemeinsamen Mantel umschlossen. Die Entwicklung moderner Druckwellenlader zur Aufladung kleiner Motoren führt zu Zellenrädern mit einem Durchmesser in der Grössenordnung von 100 mm oder weniger. Zur Erzielung eines maximalen Zellenvolumens und auch zur Gewichtsreduktion werden Zellenwandstärken von 0,5 mm oder weniger angestrebt. Bei den hohen Abgaseintrittstemperaturen von gegen 1000 °C kommen als Werkstoffe für das Zellenrad praktisch nur hochwarmfeste Stähle und Legierungen in Frage. Die Herstellung dimensionsstabiler und hochpräziser Zellenräder mit geringer Zellenwandstärke ist heute noch kaum möglich oder aber mit erheblichen Mehrkosten verbunden.

Es ist schon vorgeschlagen worden, die Kammern eines Zellenrades aus aneinander gereihten und sich teilweise überlappenden, Z-förmigen Profilen zu bilden. Die Herstellung eines derartigen Zellenrades ist jedoch mit hohem zeitlichen Aufwand verbunden. Hinzu kommt, dass das Aneinanderreihen und positionsgenaue Fixieren von Z-Profilen kaum mit einer zur Einhaltung der geforderten Toleranzen ausreichenden Präzision durchführbar ist.

Es ist auch schon vorgeschlagen worden, ein Zellenrad aus einem Vollkörper durch Erodieren der einzelnen Zellen herzustellen. Mit diesem Verfahren ist es jedoch nicht möglich, Zellenwandstärken von weniger als 0,5 mm zu erreichen. Ein weiterer wesentlicher Nachteil des Erodierverfahrens sind die damit verbundenen, hohen Material- und Bearbeitungskosten.

Ein Verfahren der eingangs genannten Art ist in WO 2010/057319 A1 offenbart. Die Fixierung der von einer Hülse nach aussen abragenden Lamellen in einer vorgegebenen Winkellage erfolgt über ein Werkzeug mit stirnseitig in Axialrichtung zwischen die Lamellen einschiebbaren Fingern, welche den Zwischenraum zwischen benachbarten Lamellen füllen und dabei die Lamellen in die vorgegebene Winkellage bringen und in dieser fixieren. Nach dem Aufschieben einer nächsten Hülse wird diese mittels eines Laserstrahls mittels einer Blindnaht mit den freien Endkanten der darunterliegenden Lamellen verschweisst. Anschliessend wird die Hülse mit weiteren, nacheinander gesetzten und mittels eines Laserstrahls mittels einer Kehlnaht mit der Hülse gefügten Lamellen bestückt und, wie vorstehend beschrieben, in einer vorgegebenen Winkellage fixiert und mit weiteren Lamellen bestückt. Dieser Vorgang wiederholt sich entsprechend dem Aufbau des zu fertigenden Zellenrades bis zum abschliessenden Setzen und Fügen der äussersten Hülse.

Die Fixierung der von einer Hülse nach aussen abragenden Lamellen in einer vorgegebenen Winkellage mit einem Werkzeug, mit dem gemäss WO 2010/057319 A1 Formstücke zwischen die Lamellen eingesetzt werden, ist mit dem Nachteil behaftet, dass sich diese Formstücke kaum mehr ohne Beschädigung der gefügten Teile aus den Lamellenzwischenräumen entfernen lassen. Der Grund liegt darin, dass die lokal hohen Temperaturen, die beim Schweissen auftreten, zu mechanischen Spannungen und damit zu einem Verklemmen der Formteile und der Lamellen führen.

### DARSTELLUNG DER ERFINDUNG

Der Erfindung liegt die Aufgabe zu Grunde, ein einfaches und kostengünstiges Verfahren der eingangs genannten Art unter Vermeidung der Nachteile des Standes der Technik zu schaffen, welches die Herstellung eines Zellenrades mit der geforderten Präzision ermöglicht. Ein weiteres Ziel der Erfindung ist die Schaffung eines Verfahrens zur Herstellung eines für den Einsatz in einem Druckwellenlader zur Aufladung von Verbrennungsmotoren, insbesondere zur Aufladung kleiner Ottomotoren mit einem Hubraum in der Grössenordnung von 1 Liter oder weniger, geeigneten Zellenrades. Insbesondere soll das Verfahren die kostengünstige Herstellung dimensionsstabiler und hochpräziser Zellenräder mit einer Zellenwandstärke von 0,5 mm oder weniger ermöglichen.

Zu erfindungsgemässen Lösung der Aufgabe schlägt die Erfindung ein Verfahren gemäß Anspruch 1 vor.

Die Hülsen und Lamellen des Zellenrades bestehen bevorzugt aus einem hochwarmfesten metallischen Werkstoff aus Blech, vorzugsweise einer Dicke von weniger als 0,5 mm.

Das mit dem erfmdungsgemässen Verfahren hergestellte Zellenrad wird bevorzugt in einem Druckwellenlader zur Aufladung von Verbrennungsmotoren, insbesondere von Ottomotoren mit einem Hubraum von 1 Liter oder weniger verwendet.

Die Herstellung von Hülsen mit von dieser radial abragenden Lamellen, die mit einer Endkante mit einer Hülse gefügt sind, kann auf unterschiedliche Weise erfolgen. Die im Zusammenhang mit vorliegender Erfindung bevorzugten Verfahren sind in WO 2010/057319 A1 beschrieben.

Bevorzugt weist das Werkzeug radial von der Innenmantelfläche ausgehende Längsnuten auf, in welche die freien Endkanten der ein Übermass aufweisenden Lamellen vor dem Einbringen der Formstoffmischung eingeführt werden, und das nach dem Entfernen des Werkzeugs aus der ausgehärteten Formstoffmischung herausragende Übermass der Lamellen wird vor dem Aufsetzen der nachfolgenden Hülse auf die freien Endkanten der Lamellen abgetragen. In besonders bevorzugter Ausführung kann die Innenmantelfläche des Werkzeugs auf beiden Seiten der Längsnuten wulstartige Erhebungen aufweisen.

Bevorzugt werden die Lamellen mit den Hülsen durch Schweissen oder Löten mittels eines Laser- oder Elektronenstrahls gefügt.

Die thermische Behandlung wird bevorzugt erst am fertiggestellten Zellenrad durchgeführt und der Formgrundstoff gleichzeitig aus allen Zellen entfernt.

Das fertiggestellte Zellenrad wird zweckmässigerweise einem Spannungsfreiglühen unterzogen, wobei die ausgehärtete Formstoffmischung bevorzugt erst nach dem Spannungsfreiglühen aus den Zellen des Zellenrades entfernt wird.

Als feuerfesten Formgrundstoff kann beispielsweise ein Kernsand, insbesondere ein Quarzsand, verwendet werden.

Das Bindemittel ist bevorzugt ein organisches Bindemittel, bei dem die Härtungsreaktion durch einen gasförmigen Katalysator beschleunigt oder das durch Reaktion mit einem gasförmigen Härter ausgehärtet wird. In besonders bevorzugter Ausführung des erfindungsgemässen Verfahrens wird als Bindemittel ein Zweikomponenten-System mit einer Lösung eines Polyols, insbesondere eines Phenolharzes, als erste Komponente und mit einer Lösung eines Polyisocyanates als zweite Komponente verwendet, und zum Aushärten wird ein gasförmiges tertiäres Amin, insbesondere Triethylamin, durch die Formstoffmischung geleitet.

Der wesentliche Kern des erfindungsgemässen Verfahrens ist die Verwendung der beim Formgiessen von Metallen zur Bereitstellung einer Formwand für das flüssige Metall eingesetzten Kernsandmischungen zur Fixierung benachbarter Lamellen vor dem Fügen in ihrer vorgegebenen Winkellage durch Ausbildung eines auf einfache Weise zwischen die Lamellen einbringbaren und wieder entfernbaren Formstücks.

Für die Verwendung mit dem erfindungsgemässen Verfahren geeignete Formstoffmischungen sind im wesentlichen alle Kernsandmischungen.

Der feuerfeste Formgrundstoff, beispielsweise Quarzsand, liegt bevorzugt in einer rieselfähigen Form vor, so dass er zwischen die Lamellen eingefüllt und dort verdichtet werden kann. Durch das Bindemittel wird ein fester Zusammenhalt zwischen den Partikeln des Formgrundstoffs erzeugt, so dass sich ausbildende Formstück die erforderliche mechanische Stabilität erhält.

Es können sowohl organische als auch anorganische Bindemittel eingesetzt werden. Bevorzugt sind dabei Bindemittel, deren Aushärtung im Wesentlichen bei Raumtemperatur durchgeführt werden kann. Die Aushärtung erfolgt dabei meist durch eine chemische Reaktion, die beispielsweise dadurch ausgelöst wird, dass ein Gas als Katalysator durch die zu härtende, zwischen die Lamellen eingefüllte und verdichtete Formstoffmischung geleitet wird.

Besonders bevorzugte Formstoffmischungen enthalten organische Bindemittel, bei denen die Härtungsreaktion durch einen gasförmigen Katalysator beschleunigt wird oder die durch Reaktion mit einem gasförmigen Härter ausgehärtet werden. Diese Verfahren werden im Giessereibereich als "Cold-Box"-Verfahren bezeichnet.

Für den erfindungsgemässen Einsatz als Bindemittel eignet sich insbesondere ein Polyurethanbinder, d. h., ein Zweikomponenten-System mit einer ersten Komponente bestehend aus der Lösung eines Polyols, z. B. eines Phenolharzes, und mit einer Lösung eines Polyisocyanates als zweite Komponente. Ein derartiges System ist beispielsweise aus der US 3,409,579 A bekannt. Die beiden Komponenten des Polyurethanbinders werden zur Reaktion gebracht, indem nach dem Einfüllen und Verdichten der Formstoffmischung ein gasförmiges tertiäres Amin durch das Gemisch aus Formgrundstoff und Bindemittel geleitet wird. Bei der Aushärtereaktion von Polyurethanbindern handelt es sich um eine Polyaddition, d. h. eine Reaktion ohne Abspaltung von Nebenprodukten, wie z. B. Wasser.

Beim Erhitzen der ausgehärteten Formstoffmischung zersetzen sich die organischen Bestandteile des Bindemittels. Der Formgrundstoff wird wieder rieselfähig und lässt sich durch einfaches Kippen des fertig gestellten Zellenrades aus den Zellen entfernen.

Bevorzugt wird das fertig gestellte Zellenrad einem Spannungsfreiglühen unterzogen. Hierbei hat es sich als besonders vorteilhaft herausgestellt, wenn die ausgehärtete Formstoffmischung erst nach dem Spannungsfreiglühen aus den Zellen des Zellenrades entfernt wird.

Als feuerfester Formgrundstoff können im Wesentlichen die im Giessbereich für die Herstellung von Kernen üblichen Materialien verwendet werden. Geeignet sind beispielsweise Quarz- oder Zirkonsand. Weiter geeignete Sande sind beispielsweise Olivin, Chromerzsand, Vermiculit.

Weiter können auch künstliche Formgrundstoffe verwendet werden, wie z. B. Aluminiumsilikathohlkugeln oder kugelförmige keramische Formgrundstoffe. Diese kugelförmigen keramischen Formgrundstoffe enthalten als Mineralien beispielsweise Mullit, Korund, Cristobalit in unterschiedlichen Anteilen. Sie enthalten als wesentliche Anteile Aluminiumoxid und Siliciumdioxid. Typische Zusammensetzungen enthalten beispielsweise Al₂O₃ und SiO₂ in etwa gleichen Anteilen. Daneben können noch weitere Bestandteile enthalten sein, wie TiO₂, Fe₂O₃. Der Durchmesser der kugelförmigen Formgrundstoffe beträgt vorzugsweise weniger als 1000 µm, insbesondere weniger als 600 µm. Geeignet sind auch synthetisch hergestellte feuerfeste Formgrundstoffe, wie beispielsweise Mullit. Diese künstlichen Formgrundstoffe gehen nicht auf einen natürlichen Ursprung zurück und können auch einem besonderen Formgebungsverfahren unterworfen worden sein, wie beispielsweise bei der Herstellung von Aluminiumsilikatmikrohohlkugeln oder kugelförmigen keramischen Formgrundstoffen.

Als feuerfeste künstliche Formgrundstoffe können auch Glasmaterialien verwendet werden. Diese werden insbesondere entweder als Glaskugeln oder als Glasgranulat eingesetzt. Als Glas können übliche Gläser verwendet werden, wobei Gläser, die einen hohen Schmelzpunkt zeigen, bevorzugt sind. Geeignet sind beispielsweise Glasperlen und/oder Glasgranulat, das aus Glasbruch hergestellt wird. Ebenfalls geeignet sind Boratgläser.

Das Befüllen der Lamellenzwischenräume mit der Formstoffmischung erfolgt bevorzugt mit den im Giessereibereich zur Kernherstellung verwendeten Verfahren. Beispielsweise kann die Formstoffmischung mittels einer Kernschiessmaschine mit Hilfe von Druckluft in die Lamellenzwischenräume geschossen und mittels einer Rütteleinrichtung verdichtet werden. Die eingeschossene und verdichtete Formstoffmischung wird anschliessend, z. B. durch eine Begasung, ausgehärtet. Diese Begasung wird bevorzugt bei Raumtemperatur ausgeführt. Die Begasungsdauer liegt dabei in der Grössenordnung von Sekunden.

### KURZE BESCHREIBUNG DER ZEICHNUNG

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: einen Längsschnitt in der Rotationsachse durch ein Zellenrad für einen Druckwellenlader;
- Fig. 2: einen Schnitt senkrecht zur Rotationsachse des Zellenrades von Fig. 1 nach der Linie I-I;
- Fig. 3: einen Längsschnitt durch eine Antriebswelle mit einer Flanschhülse für den Aufbau des Zellenrades von Fig. 1;
- Fig. 4: einen Längsschnitt durch die in eine Aufnahmeplatte eingesetzte Antriebswelle mit Flanschhülse von Fig. 3;
- Fig. 5: den Längsschnitt von Fig. 4 mit der auf die Flanschhülle aufgesetzten, mit Lamellen bestückten Innenhülse des Zellenrades von Fig. 1 und mit einem auf die Lamellen aufgesetzten ersten Werkzeug;
- Fig. 6: einen Schnitt durch die Anordnung von Fig. 5 nach der Linie II-II;
- Fig. 7: ein vergrössertes Detail von Fig. 6 der mit Kernsand gefüllten Anordnung von Fig. 5;
- Fig. 8: den Schnitt von Fig. 6 durch die Anordnung von Fig. 5 mit der auf die Lamellen der Innenhülse aufgesetzten, mit Lamellen bestückten ersten Zwischenhülse des Zellenrades von Fig. 1 und mit einem auf die Lamellen der ersten Zwischenhülse aufgesetzten zweiten Werkzeug;
- Fig. 9: ein der Fig. 7 entsprechendes vergrössertes Detail von Fig. 8 der weiter mit Kernsand gefüllten Anordnung;
- Fig. 10 den: Schnitt von Fig. 8 durch die Anordnung von Fig. 5 mit der auf die Lamellen der ersten Zwischenhülse aufgesetzten, mit Lamellen bestückten zweiten Zwischenhülse des Zellenrades von Fig. 1 und mit einem auf die Lamellen der zweiten Zwischenhülse aufgesetzten zweiten Werkzeug;
- Fig. 11: ein der Fig. 9 entsprechendes vergrössertes Detail von Fig. 10 der weiter mit Kernsand gefüllten Anordnung;
- Fig. 12: ein weiter vergrössertes Detail der Fig. 11 mit einer Werkzeugvariante;
- Fig. 13: ein vergrössertes Detail der Umgebung einer Schweissstelle bei Verwendung der Werkzeugvariante von Fig. 12.

### BESCHREIBUNG BEVORZUGTER AUSFÜHRUNGSFORMEN

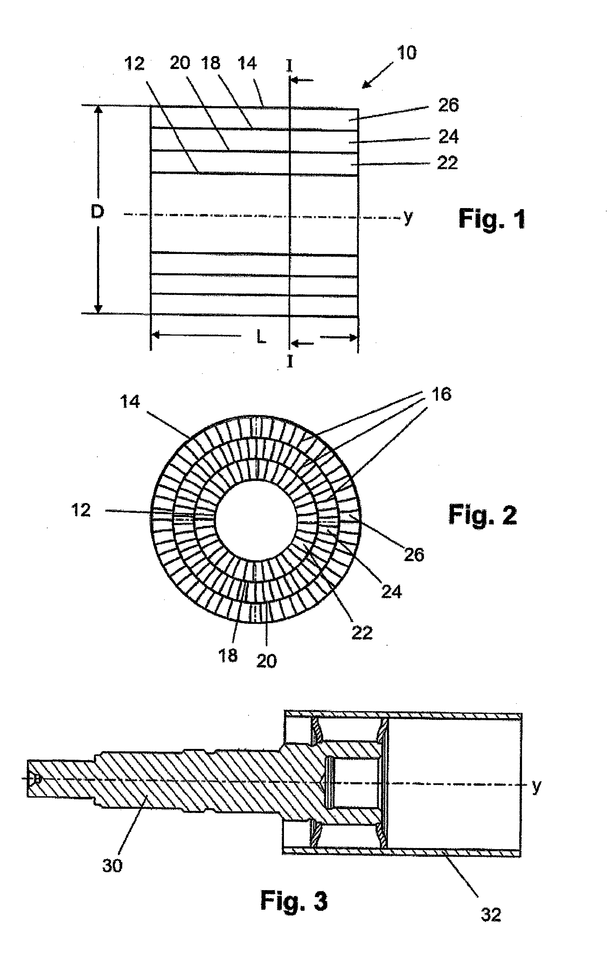

Ein in den Fig. 1 und 2 gezeigtes Zellenrad 10 eines in der Zeichnung nicht dargestellten Druckwellenladers besteht aus einer konzentrisch zu einer Rotationsachse y des Zellenrades 10 liegenden, zylindrischen Innenhülse 12, einer konzentrisch zur Innenhülse 12 liegenden, zylindrischen Aussenhülse 14 und zwei zwischen der Innenhülse 12 und der Aussenhülse 14 konzentrisch zu diesen angeordneten Zwischenhülsen 18, 20. Der innere ringförmige Raum zwischen Innenhülse 12 und der ersten Zwischenhülse 18, der mittlere ringförmige Raum zwischen der ersten Zwischenhülse 18 und der zweiten Zwischenhülse 20 und der der äussere ringförmige Raum zwischen der zweiten Zwischenhülse 20 und der Aussenhülse 14 sind durch radial zur Rotationsachse y liegende streifenförmige Lamellen 16 in eine Vielzahl innere Zellen 22 und gegenüber diesen drehversetzt angeordnete mittlere Zellen 24 und gegenüber diesen wiederum drehversetzt angeordnete äussere Zellen 26 unterteilt. Das beispielhaft dargestellte Zellenrad 10 mit einem Durchmesser D und einer Länge L von z. B. 100 mm weist 36 innere Zellen 22, 54 mittlere Zellen 24 und 54 äussere Zellen 26 auf. Die Innenhülse 12, die Zwischenhülsen 18, 20 die Aussenhülse 14 und die Lamellen 16 weisen eine einheitliche Wandstärke von z. B. 0,4 mm auf und bestehen aus einem hochwarmfesten metallischen Werkstoff, z. B. Inconel 2.4856. Die genannten Teile weisen in Richtung der Rotationsachse y eine gleiche Länge L entsprechend der Länge des Zellenrades 10 auf und erstrecken sich zwischen zwei senkrecht zur Rotationsachse y stehenden Stirnseiten des Zellenrades 10.

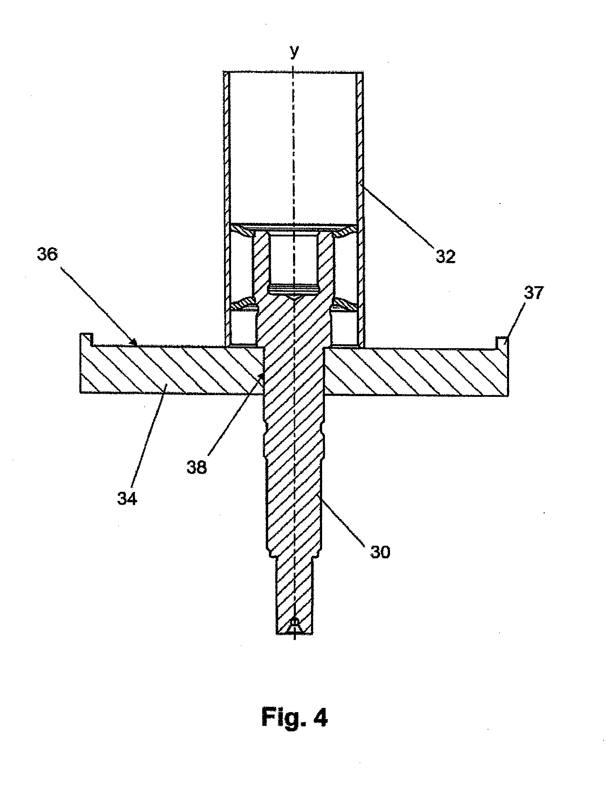

Auf einer in Fig. 3 gezeigten Antriebswelle 30 für ein in den Fig. 1 und 2 dargestelltes Zellenrad 10 sitzt eine konzentrisch zur Antriebswelle 30 angeordnete Flanschhülse 32. Die Drehachse der Antriebswelle 30 entspricht der Rotationsachse y eines auf der Antriebswelle 30 aufgesetzten Zellenrades 10. Anhand der Fig. 4 bis 13 wird nachfolgend der schrittweise Aufbau des in den Fig. 1 und 2 gezeigten Zellenrades 10 auf der auf der Antriebswelle 30 angeordneten Flanschhülse 32 näher erläutert.

Wie in Fig. 4 gezeigt, wird die Antriebswelle 30 mit der auf dieser angeordneten Flanschhülse 32 in eine zentrale Bohrung 38 einer kreisrunden Aufnahmeplatte 34 so eingesetzt und fixiert, dass die Flanschhülse 32 mit ihrem antriebswellenseitigen Ende einer Basisfläche 36 über den ganzen stirnseitigen Umfang aufliegt und die der Rotationsachse y des Zellenrades 10 entsprechende Drehachse y der Antriebswelle 30 senkrecht auf der Basisfläche 36 steht.

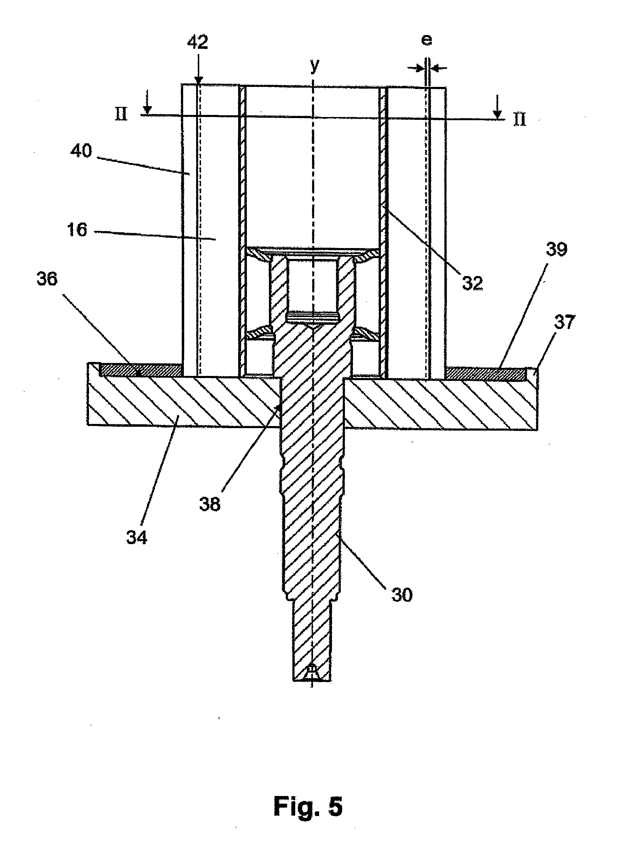

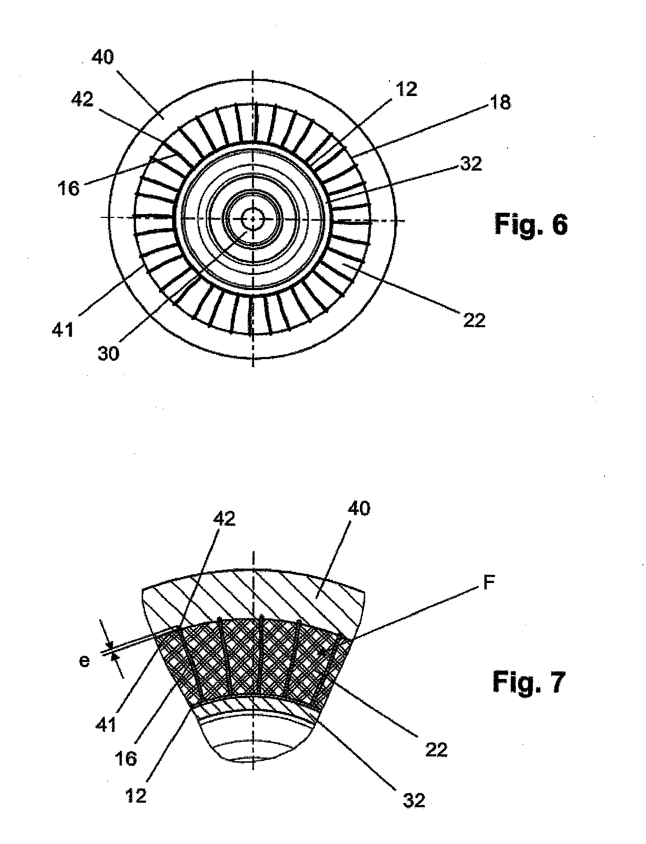

Gemäss den Fig. 5 und 6 wird die Innenhülse 12, deren Innendurchmesser und Länge auf den Aussendurchmesser und die Länge der Flanschhülse 32 abgestimmt ist, mit den vorgängig mit der Innenhülse 12 mit einer Endkante positionsgenau gefügten und mit der freien Endkante radial nach aussen abragenden Lamellen 16 in Achsrichtung y bis zum Anschlag mit der Basisfläche 36 der Aufnahmeplatte 34 konzentrisch auf die Flanschhülse 32 aufgesetzt und mit dieser mittels eines NC-gesteuerten Laserstrahls verschweisst.

Ein erstes Werkzeug 40 in Form eines Hohlzylinders mit einer zylindrischen Innenmantelfläche 41, deren Durchmesser dem Innendurchmesser der ersten Zwischenhülse 18 entspricht, weist positionsgenau angeordnete, von der Innenmantelfläche 41 radial in das erste Werkzeug 40 einragende und parallel zur Achsrichtung y verlaufende Längsnuten 42 auf. Das erste Werkzeug 40 wird mittels einer Zentrierringscheibe 39, deren äussere Umfangfläche einem koaxial zur Achsrichtung y bzw. Bohrung 38 von der Basisfläche 36 der Aufnahmeplatte 34 aufragenden Ringrand 37 anliegt und deren Innendurchmesser dem Aussendurchmesser des ersten Werkzeugs 40 entspricht, positionsgenau auf die Basisfläche 36 gesetzt und fixiert. Anschliessend wird die mit den radial nach aussen abragenden Lamellen 16 bestückte und mit der Flanschhülse 32 bereits verschweisste Innenhülse 12 mit der Antriebswelle 30 in Achsrichtung y bis zum Anschlag mit der Basisfläche 36 der Aufnahmeplatte 34 mittels einer Einführhilfe für die Lamellen konzentrisch in das erste Werkzeug 40 eingeführt. Die ein Übermass e aufweisenden Lamellen 16 der Innenhülse 12 sind dabei in den Längsnuten 42 des ersten Werkzeugs 40 geführt.

Wie in Fig. 7 dargestellt, werden die anstelle der in einem späteren Schritt zu setzenden ersten Zwischenhülse 18 vorläufig von der Innenmantelfläche 41 des ersten Werkzeugs 40 begrenzten inneren Zellen 22 mit einer Formstoffmischung F gefüllt. Nach dem Verdichten wird die die inneren Zellen 22 vollständig ausfüllende Formstoffmischung F ausgehärtet.

Eine geeignete Formstoffmischung besteht beispielsweise aus einem natürlichen oder synthetischen Formgrundstoff einer mittleren Korngrösse von 0,2-0,36 mm und einer AFS-Zahl von 52-45, z. B. Quarzsand H32, mit einem Bindemittel auf Polyurethan-Basis mit Trimethylamin als Katalysator für den Härtungsprozess. Die Formstoffmischung kann mit einer handelsüblichen Kernschiessmaschine in die Zellen eingefüllt und mit einer Rütteleinrichtung verdichtet werden.

Nach dem Aushärten der Formstoffmischung F wird das auf der Flanschhülse 32 aufgebaute, teilgefertigte Zellenrad samt der Antriebswelle 30 in axialer Richtung y aus dem ersten Werkzeug 40 ausgestossen und die mit dem Übermass e aus der ausgehärteten Formstoffmischung F herausragenden Lamellen 16 der Innenhülse 12 werden, z. B. durch Schleifen, bis auf ein dem Innendurchmesser der ersten Zwischenhülse 18 entsprechendes Mass abgetragen. Da die Lamellen in der ausgehärteten Formstoffmischung fest verankert sind, kann das Abtragen des Übermasses e problemlos durch Schleifen erfolgen.

Die erste Zwischenhülse 18 mit den mit dieser einseitig gefügten und radial nach aussen abragenden Lamellen 16 wird in Achsrichtung y positionsgenau auf die freien Endkanten der von der ausgehärteten Formstoffmischung F umschlossenen Lamellen 16 gesetzt. Anschliessend wird die erste Zwischenhülse 18 mittels eines Laserstrahls mittels einer Blindnaht mit den freien Endkanten der darunterliegenden Lamellen 16 der Innenhülse 12 unter Bildung der inneren Zellen 22 verschweisst.

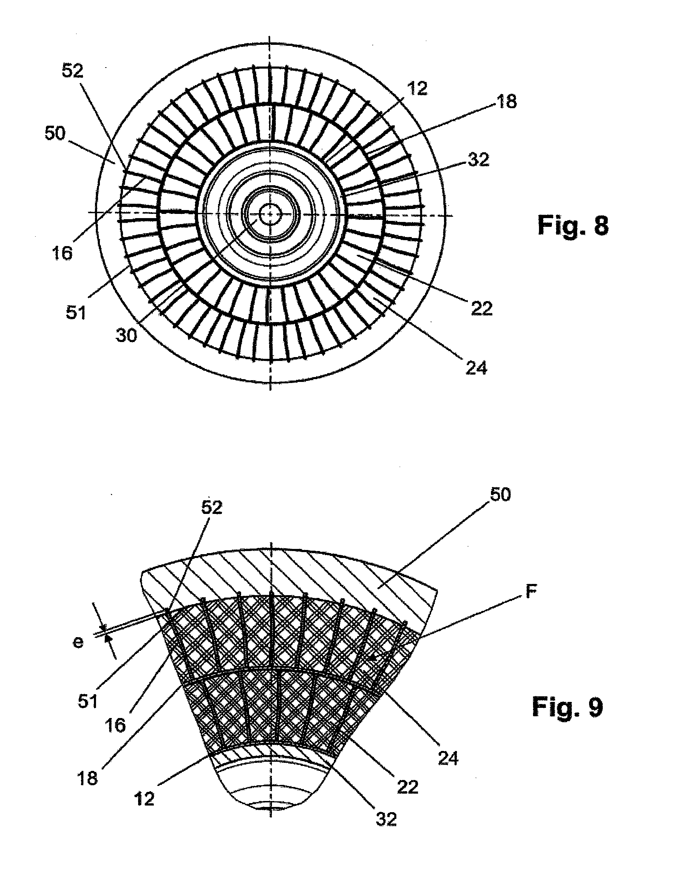

Ein zweites Werkzeug 50 in Form eines Hohlzylinders mit einer zylindrischen Innenmantelfläche 51, deren Durchmesser dem Innendurchmesser der zweiten Zwischenhülse 20 entspricht, weist positionsgenau angeordnete, von der Innenmantelfläche 51 radial in das zweite Werkzeug 50 einragende und parallel zur Achsrichtung y verlaufenden Längsnuten 52 auf. Das zweite Werkzeug 50 wird mittels einer Zentrierringscheibe , deren äussere Umfangfläche einem koaxial zur Achsrichtung y von der Basisfläche 36 der Aufnahmeplatte 34 aufragenden Ringrand 37 anliegt und deren Innendurchmesser dem Aussendurchmesser des zweiten Werkzeugs 50 entspricht, positionsgenau auf die Basisfläche 36 gesetzt und fixiert. Anschliessend wird die mit den radial nach aussen abragenden Lamellen 16 bestückte und mit den Lamellen 16 der Innenhülse 12 bereits verschweisste erste Zwischenhülse 18 mit der Antriebswelle 30 in Achsrichtung y bis zum Anschlag mit der Basisfläche 36 der Aufnahmeplatte 34 mittels einer Einführhilfe für die Lamellen konzentrisch in das zweite Werkzeug 50 eingeführt. Die ein Übermass e aufweisenden Lamellen 16 der ersten Zwischenhülse 18 sind dabei in den Längsnuten 52 des zweiten Werkzeugs 50 geführt (Fig.8).

Wie in Fig. 9 dargestellt, werden die anstelle der in einem späteren Schritt zu setzenden zweiten Zwischenhülse 20 vorläufig von der Innenmantelfläche 51 des zweiten Werkzeugs 50 begrenzten mittleren Zellen 24 mit der Formstoffmischung F gefüllt. Nach dem Verdichten wird die die mittleren Zellen 24 vollständig ausfüllende Formstoffmischung F ausgehärtet.

Nach dem Aushärten der Formstoffmischung F wird das auf der Flanschhülse 32 aufgebaute, teilgefertigte Zellenrad samt der Antriebswelle 30 in axialer Richtung y aus dem zweiten Werkzeug 50 ausgestossen und die mit dem Übermass e aus der ausgehärteten Formstoffmischung F herausragenden Lamellen 16 der ersten Zwischenhülse 18 werden, z. B. durch Schleifen, bis auf ein dem Innendurchmesser der zweiten Zwischenhülse 20 entsprechendes Mass abgetragen.

Die zweite Zwischenhülse 20 mit den mit dieser einseitig gefügten und radial nach aussen abragenden Lamellen 16 wird in Achsrichtung y positionsgenau auf die freien Endkanten der von der ausgehärteten Formstoffmischung F umschlossenen Lamellen 16 der ersten Zwischenhülse 18 mittleren Zellen 24 gesetzt. Anschliessend wird die zweite Zwischenhülse 20 mittels eines Laserstrahls mittels einer Blindnaht mit den freien Endkanten der darunterliegenden Lamellen 16 der ersten Zwischenhülse unter Bildung der mittleren Zellen 24 verschweisst.

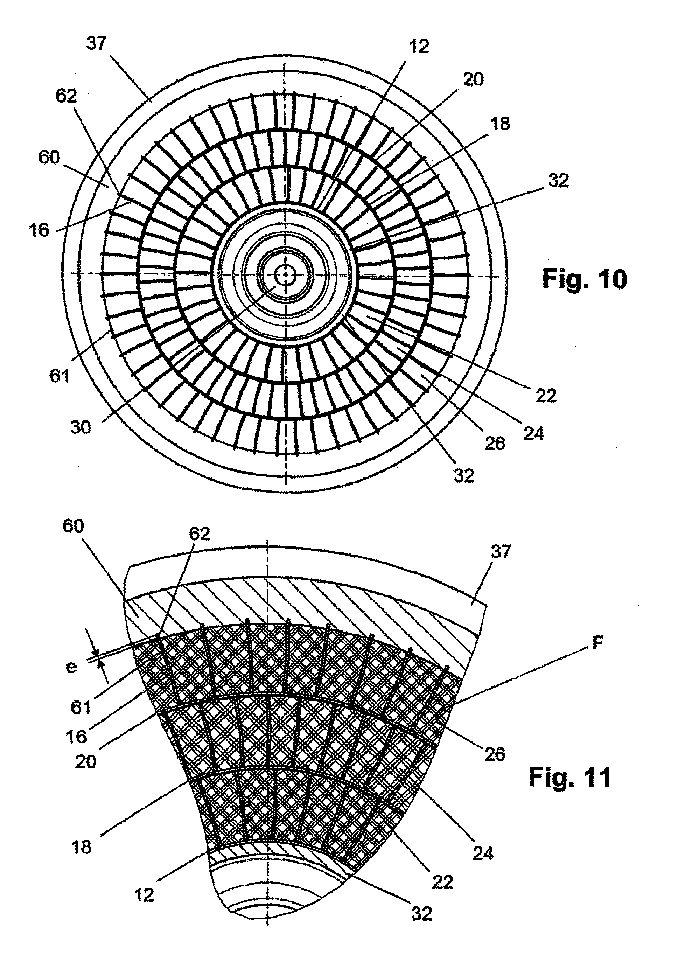

Ein drittes Werkzeug 60 in Form eines Hohlzylinders mit einer zylindrischen Innenmantelfläche 61, deren Durchmesser dem Innendurchmesser der Aussenhülse 14 entspricht, weist positionsgenau angeordnete, von der Innenmantelfläche 61 radial in das dritte Werkzeug 60 einragende und parallel zur Achsrichtung y verlaufende Längsnuten 62 auf. Das dritte Werkzeug 60 wird positionsgenau auf die Basisfläche 36 gesetzt und fixiert. Das dritte Werkzeug 60 liegt hierbei dem koaxial zur Achsrichtung y von der Basisfläche 36 der Aufnahmeplatte 34 aufragenden Ringrand 37 an. Anschliessend wird die mit den radial nach aussen abragenden Lamellen 16 bestückte und mit den Lamellen 16 der ersten Zwischenhülse 18 bereits verschweisste zweite Zwischenhülse 20 mit der Antriebswelle 30 in Achsrichtung y bis zum Anschlag mit der Basisfläche 36 der Aufnahmeplatte 34 mittels einer Einführhilfe für die Lamellen konzentrisch in das dritte Werkzeug 60 eingeführt. Die ein Übermass e aufweisenden Lamellen 16 der zweiten Zwischenhülse 20 sind dabei in den Längsnuten 62 des dritten Werkzeugs 60 geführt (Fig. 10). Das im Anschlag mit der Basisfläche 36 der Aufnahmeplatte 34 stehende dritte Werkzeug 60 ist durch den konzentrisch zur Bohrung 38 angeordneten und von der Basisfläche 36 der Aufnahmeplatte 34 aufragenden, peripheren Ringrand 37 positionsgenau zentriert.

Wie in Fig. 11 dargestellt, werden die anstelle der in einem späteren Schritt zu setzenden Aussenhülse 14 vorläufig von der Innenmantelfläche 61 des dritten Werkzeugs 60 begrenzten äusseren Zellen 26 mit der Formstoffmischung F gefüllt. Nach dem Verdichten wird die die mittleren Zellen 26 vollständig ausfüllende Formstoffmischung F ausgehärtet.

Nach dem Aushärten der Formstoffmischung F wird das auf der Flanschhülse 32 aufgebaute, teilgefertigte Zellenrad samt der Antriebswelle 30 in axialer Richtung y aus dem dritten Werkzeug 60 ausgestossen und die mit dem Übermass e aus der Formstoffmasse herausragenden Lamellen 16 der zweiten Zwischenhülse 20 werden, z. B. mittels Schleifen, bis auf ein dem Innendurchmesser der Aussenhülse 14 entsprechendes Mass abgetragen.

Die Aussenhülse 14 wird in Achsrichtung y auf die freien Endkanten der von der ausgehärteten Formstoffmischung F umschlossenen Lamellen 16 der zweiten Zwischenhülse 20 gesetzt. Anschliessend wird die Aussenhülse 14 mittels eines Laserstrahls mittels einer Blindnaht mit den freien Endkanten der darunterliegenden Lamellen 16 der zweiten Zwischenhülse 20 unter Bildung der äusseren Zellen 26 verschweisst.

Die Antriebswelle 30 mit dem nun fertiggestellten Zellenrad 10, dessen Zellen 22, 24, 26 immer noch mit der ausgehärteten Formstoffmischung F gefüllt sind, wird nun einem Spannungsfreiglühen bei einer Temperatur von z. B. 550°C während 3 Stunden unterworfen. Bei dieser Wärmebehandlung erfolgt gleichzeitig eine thermische Regeneration des Formgrundstoffes. Hierbei zersetzt sich das Bindemittel und der vom Bindemittel befreite Formgrundstoff rieselt ohne weiteres aus den Zellen 22, 24, 26.

Beim Spannungsfreiglühen geht das beim Fügen der Endkanten der Lamellen mit der nachfolgenden Hülse entstehende, inhomogene Spannungsfeld in einen Gleichgewichtszustand mit einem homogenen Spannungsfeld über, so dass das Zellenrad nach dem anschliessenden Entfernen des Formgrundstoffs aus den Zellen frei von Verzug ist und demzufolge auf ein Auswuchten verzichtet werden kann.

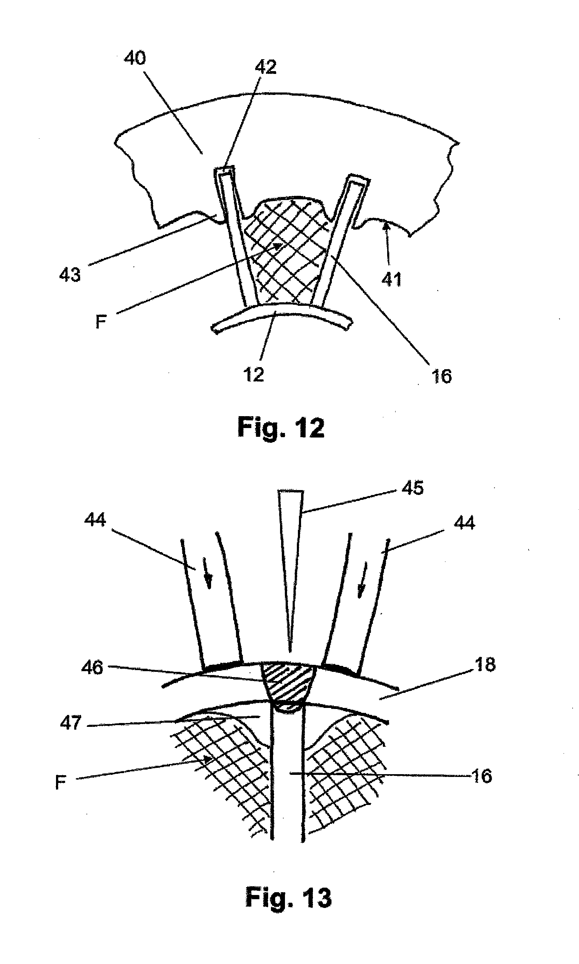

Bei der in Fig. 12 dargestellten Variante eines ersten Werkzeugs 40 sind auf beiden Seiten der Längsnuten 42 von der Innenmantelfläche 41 aufragende wulstartige Erhebungen 43 angeordnet, die zu entsprechend geformten Vertiefungen in der zwischen die Lamellen 16 eingefüllten und ausgehärteten Formstoffmischung F führen. Wie in Fig. 13 gezeigt, führen diese Vertiefungen 43 nach dem Abziehen des ersten Werkzeugs 40 und dem Aufschieben 40 der ersten Zwischenhülse 18 auf die freien Endkanten der um das Übermass e gekürzten, von der Innenhülse 12 radial abragenden Lamellen 16 zu beidseits der Lamellen 16 angeordneten und gegen die aufliegende Zwischenhülse 18 offenen Kanälen 47. Wird nun die erste Zwischenhülse 18 mittels eines Laserstrahls 45 mittels einer Blindnaht 46 mit den freien Endkanten der darunterliegenden Lamellen 16 der Innenhülse 12 verschweisst, ermöglichen die Kanäle 47 ein gutes Anpressen der Zwischenhülse 18 über Niederhalter 44 an die freien Endkanten der Lamellen 16 und damit eine optimale Schweissung. Ein weiterer Vorteil der Kanäle 47 wird darin gesehen, dass ein zur Verhinderung der Oxidation eingesetztes Inertgas auf direktem Weg an die gegen Oxidation anfälligen Kontaktflächen der Zwischenhülse 18 mit den freien Endkanten der Lamellen 16 geführt werden kann.

Die in den Fig. 12 und 13 dargestellte Variante des ersten Werkzeugs 40 kann selbstverständlich auch auf die zweiten und dritten Werkzeuge 50, 60 angewendet werden.

### BEZUGSZEICHENLISTE

- 10: Zellenrad
- 12: Innenhülse
- 14: Aussenhülse
- 16: Lamellen
- 18: erste Zwischenhülse
- 20: zweite Zwischenhülse
- 22: innere Zellen
- 24: mittlere Zellen
- 26: äussere Zellen
- 30: Antriebswelle
- 32: Flanschhülse
- 34: Aufnahmeplatte
- 36: Basisfläche von 34
- 37: Ringrand an 34
- 38: zentrale Bohrung in 34
- 39: Zentrierringscheibe
- 40: erstes Werkzeug
- 41: Innenmantelfläche von 40
- 42: Längsnuten in 40
- 43: wulstartige Erhebungen
- 44: Niederhalter
- 45: Laserstrahl
- 46: Blindnaht
- 47: Kanäle
- 50: erstes Werkzeug
- 51: Innenmantelfläche von 50
- 52: Längsnuten in 40
- 60: erstes Werkzeug
- 61: Innenmantelfläche von 60
- 62: Längsnuten in 40
- e: Übermass von 16

## Patentansprüche

1. Verfahren zur Herstellung eines Zellenrades (10) aus Metall, mit konzentrisch zu einer Rotationsachse (y) liegenden Hülsen (12, 18, 20, 14) und zwischen aufeinanderfolgenden Hülsen angeordneten, radial zur Rotationsachse (y) ausgerichteten Lamellen (16), die mit einer Endkante mit einer Hülse (12, 18, 20) 14) gefügt sind und vor dem Fügen der freien Endkanten mit einer nachfolgenden Hülse (18, 20, 14) in ihrer Winkellage fixiert werden,
wobei
(a) ein Werkzeug (40, 50, 60) mit einer zylindrischen Innenmantelfläche (41, 51, 61), deren Durchmesser dem Innendurchmesser der nachfolgenden Hülse (18, 20, 14) entspricht, zum Fixieren der Lamellen (16) in ihrer Winkellage auf die freien Endkanten der Lamellen (16) aufgesetzt wird,
(b) eine Formstoffmischung (F) aus einem feuerfesten Formgrundstoff und einem aushärtbaren und durch thermische Behandlung vom Formgrundstoff lösbaren Bindemittel in die von der Innenmantelfläche (41, 51, 61) des Werkzeugs (40, 50, 60) und den Lamellen (16) begrenzten Zellen (22, 24, 26) eingebracht und ausgehärtet wird,
(c) nach dem Entfernen des Werkzeugs (40, 50, 60) die nachfolgende Hülse (18, 20, 14) auf die freien Endkanten der durch die ausgehärtete Formstoffmischung (F) in ihrer Winkellage fixierten Lamellen (16) aufgesetzt wird,
(d) die freien Endkanten der Lamellen (16) mit der nachfolgenden Hülse (18, 20, 14) durch Schweissen oder Löten zu den Zellen (22, 24, 26) gefügt werden, und
(e) die ausgehärtete Formstoffmischung (F) thermisch behandelt und der Formgrundstoff aus den Zellen (22, 24, 26) entfernt wird.

2. Verfahren nach Anspruch 1, **dadurch gekennzeichnet, dass** das Werkzeug (40, 50, 60) radial von der Innenmantelfläche (41, 51, 61) ausgehende Längsnuten (42, 52, 62) aufweist, in welche die freien Endkanten der ein Übermass (e) aufweisenden Lamellen (16) vor dem Einbringen der Formstoffmischung (F) eingeführt werden, und dass das nach dem Entfernen des Werkzeugs (40, 50, 60) aus der ausgehärteten Formstoffmischung (F) herausragende Übermass (e) der Lamellen (16) vor dem Aufsetzen der nachfolgenden Hülse (18, 20, 14) auf die freien Endkanten der Lamellen (16) abgetragen wird.

3. Verfahren nach Anspruch 2, **dadurch gekennzeichnet, dass** die Innenmantelfläche (41, 51, 61) des Werkzeugs (40, 50, 60) auf beiden Seiten der Längsnuten (42, 52, 62) wulstartige Erhebungen (43, 53, 63) aufweist.

4. Verfahren nach einem der Ansprüche 1 bis 3, **dadurch gekennzeichnet, dass** die thermische Behandlung am fertiggestellten Zellenrad (10) durchgeführt und der Formgrundstoff gleichzeitig aus allen Zellen (22, 24, 26) entfernt wird.

5. Verfahren nach einem der Ansprüche 1 bis 4, **dadurch gekennzeichnet, dass** das fertiggestellte Zellenrad (10) einem Spannungsfreiglühen unterzogen wird.

6. Verfahren nach Anspruch 5, **dadurch gekennzeichnet, dass** die ausgehärtete Formstoffmischung (F) nach dem Spannungsfreiglühen aus den Zellen (22, 24, 26) des Zellenrades (10) entfernt wird.

7. Verfahren nach einem der Ansprüche 1 bis 6, **dadurch gekennzeichnet, dass** als feuerfesten Formgrundstoff ein Kernsand, insbesondere ein Quarzsand, verwendet wird.

8. Verfahren nach einem der Ansprüche 1 bis 6, **dadurch gekennzeichnet, dass** das Bindemittel ein organisches Bindemittel ist, bei dem die Härtungsreaktion durch einen gasförmigen Katalysator beschleunigt oder das durch Reaktion mit einem gasförmigen Härter ausgehärtet wird.

9. Verfahren nach Anspruch 8, **dadurch gekennzeichnet, dass** als Bindemittel ein Zweikomponenten-System mit einer Lösung eines Polyols, insbesondere eines Phenolharzes, als erste Komponente und mit einer Lösung eines Polyisocyanates als zweite Komponente verwendet wird zum Aushärten ein gasförmiges tertiäres Amin, insbesondere Triethylamin, durch die Formstoffmischung (F) geleitet wird.

10. Verfahren nach einem der Ansprüche 1 bis 9, **dadurch gekennzeichnet, dass** die Lamellen (16) mit den Hülsen (18, 20, 14) durch Schweissen oder Löten mittels eines Laser- oder Elektronenstrahls gefügt werden.

11. Verfahren nach einem der Ansprüche 1 bis 10, **dadurch gekennzeichnet, dass** die Hülsen (12, 18, 20, 14) und Lamellen (16) aus einem hochwarmfesten metallischen Werkstoff aus Blech, vorzugsweise einer Dicke von weniger als 0,5 mm, bestehen.

## Claims

1. A method for producing a cellular wheel (10) from metal, having sleeves (12, 18, 20, 14) which lie concentrically with respect to a rotational axis (y) and fins (16) which are arranged between sleeves which follow one another, are oriented radially with respect to the rotational axis (y), are joined with an end edge to a sleeve (12, 18, 20, 14), and are fixed in their angular position before the joining of the free end edges to a following sleeve (18, 20, 14),
wherein
(a) a tool (40, 50, 60) with a cylindrical inner circumferential face (41, 51, 61), the diameter of which corresponds to the internal diameter of the following sleeve (18, 20, 14), is placed onto the free end edges of the fins (16)in order to fix the fins (16) in their angular position,
(b) a molding material mixture (F) comprising a fire-resistant basic molding material and a binding agent which can be hardened and can be released from the basic molding material by thermal treatment is introduced into the cells (22, 24, 26) which are delimited by the inner circumferential face (41, 51, 61) of the tool (40, 50, 60) and the fins (16), and is hardened,
(c) after the removal of the tool (40, 50, 60), the following sleeve (18, 20, 14) is placed onto the free end edges of the fins (16) which are fixed in their angular position by the hardened molding material mixture (F),
(d) the free end edges of the fins (16) are joined to the following sleeve (18, 20, 14) by welding or brazing to the cells (22, 24, 26), and
(e) the hardened molding material mixture (F) is treated thermally and the basic molding material is removed from the cells (22, 24, 26).

2. The method as claimed in claim 1, **characterized in that** the tool (40, 50, 60) has longitudinal grooves (42, 52, 62) which emanate radially from the inner circumferential face (41, 51, 61) and into which the free end edges of the fins (16) which have an oversize (e) are inserted before the introduction of the molding material mixture (F), and **in that** the oversize (e) of the fins (16) which projects out of the hardened molding material mixture (F) after the removal of the tool (40, 50, 60) is removed before the following sleeve (18, 20, 14) is placed onto the free end edges of the fins (16).

3. The method as claimed in claim 2, **characterized in that** the inner circumferential face (41, 51, 61) of the tool (40, 50, 60) has bead-like elevations (43, 53, 63) on both sides of the longitudinal grooves (42, 52, 62).

4. The method as claimed in one of claims 1 to 3, **characterized in that** the thermal treatment is carried out on the finished cellular wheel (10) and the basic molding material is removed from all cells (22, 24, 26) at the same time.

5. The method as claimed in one of claims 1 to 4, **characterized in that** the finished cellular wheel (10) is subjected to stress-relief annealing.

6. The method as claimed in claim 5, **characterized in that** the hardened molding material mixture (F) is removed from the cells (22, 24, 26) of the cellular wheel (10) after the stress-relief annealing.

7. The method as claimed in one of claims 1 to 6, **characterized in that** a core sand, in particular a quartz sand, is used as fire-resistant basic molding material.

8. The method as claimed in one of claims 1 to 6, **characterized in that** the binding agent is an organic binding agent, in which the hardening reaction is accelerated by a gaseous catalyst or which is hardened by reaction with a gaseous hardener.

9. The method as claimed in claim 8, **characterized in that** a two-component system with a solution of a polyol, in particular of a phenolic resin, as first component and with a solution of a polyisocyanate as second component is used as binding agent, and a gaseous tertiary amine, in particular triethylamine, is guided through the molding material mixture (F) for hardening.

10. The method as claimed in one of claims 1 to 9, **characterized in that** the fins (16) are joined to the sleeves (18, 20, 14) by welding or brazing by means of a laser or electron beam.

11. The method as claimed in one of claims 1 to 10, **characterized in that** the sleeves (12, 18, 20, 14) and fins (16) are composed of a highly heat-resistant metallic material made from metal sheet, preferably with a thickness of less than 0.5 mm.

## Revendications

1. Procédé de fabrication d'une roue cellulaire (10) en métal dotée de douilles (12, 18, 20, 14) situées concentriquement par rapport à un axe de rotation (y) et de lamelles (16) disposées entre des douilles successives orientées radialement par rapport à l'axe de rotation (y), jointes par un bord d'extrémité à une douille (12, 18, 20, 14) et dont la position angulaire est fixée avant l'insertion des bords d'extrémité libres dans une douille (18, 20, 14) suivante,
(a) un outil (40, 50, 60) doté d'une surface cylindrique (41, 51, 61) d'enveloppe intérieure dont le diamètre correspond au diamètre intérieur de la douille (18, 20, 14) suivante étant placé sur les bords d'extrémité libre des lamelles (16) avant la fixation des lamelles (16) dans leur position angulaire,
(b) un mélange (F) de matière de moulage constitué d'une matière de moulage de base réfractaire et d'un liant durcissable et libérable par traitement thermique de la matière de base de moulage étant amené dans les cellules (22, 24, 26) délimitées par la surface (41, 51, 61) d'enveloppe intérieure de l'outil (40, 50, 60) et par les lamelles (16) et étant durci,
(c) avant l'enlèvement de l'outil (40, 50, 60), la douille (18, 20, 14) suivante étant placée sur les bords d'extrémité libre des lamelles (16) fixées dans leur position angulaire par le mélange (F) de matière de moulage durcie,
(d) les bords d'extrémité libre des lamelles (16) étant joints aux cellules (22, 24, 26) avec la douille suivante (18, 20, 14) par soudage ou brasage et
(e) le mélange (F) de matière de moulage durci étant traité thermiquement et la matière de moulage de base étant enlevée des cellules (22, 24, 26).

2. Procédé selon la revendication 1, **caractérisé en ce que** l'outil (40, 50, 60) présente des rainures longitudinales (42, 52, 62) qui partent radialement de la surface (41, 51, 61) d'enveloppe intérieure, **en ce que** les bords d'extrémité libre des lamelles (16) présentant un débord (e) sont insérés avant l'apport du mélange (F) de matière de moulage et **en ce qu'**après l'enlèvement de l'outil (40, 50, 60) hors du mélange (F) de matière de moulage durci, le débord (e) des lamelles (16) est enlevé avant le placement de la douille (18, 20, 14) suivante sur les bords d'extrémité libre des lamelles (16).

3. Procédé selon la revendication 2, **caractérisé en ce que** sur les deux côtés des rainures longitudinales (42, 52, 62), la surface (41, 51, 61) d'enveloppe intérieure de l'outil (40, 50, 60) présente des reliefs (43, 53, 63) en forme de bourrelet.

4. Procédé selon l'une des revendications 1 à 3, **caractérisé en ce que** le traitement thermique est exécuté sur la roue cellulaire (10) terminée et **en ce que** la matière de moulage de base est enlevée simultanément de toutes les cellules (22, 24, 26).

5. Procédé selon l'une des revendications 1 à 4, **caractérisé en ce que** la roue cellulaire (10) terminée subit un recuit de soulagement des contraintes.

6. Procédé selon la revendication 5, **caractérisé en ce que** le mélange (F) de matière de moulage durci est enlevé des cellules (22, 24, 26) de la roue cellulaire (10) après le recuit de soulagement des contraintes.

7. Procédé selon l'une des revendications 1 à 6, **caractérisé en ce qu'**il utilise comme matière de base de moulage réfractaire un sable granulé et en particulier un sable au quartz.

8. Procédé selon l'une des revendications 1 à 6, **caractérisé en ce que** le liant est un liant organique et dans lequel la réaction de durcissement est accélérée par un catalyseur gazeux ou qui est durci par réaction avec un agent durcissant gazeux.

9. Procédé selon la revendication 8, **caractérisé en ce qu'**il utilise comme liant un système à deux composants qui présente une solution d'un polyol et en particulier d'une résine de phénol comme premier composant et une solution de polyisocyanate comme deuxième composant pour durcir une amine tertiaire gazeuse, en particulier la triéthylamine, le liant étant amené à travers le mélange (F) de matière de moulage.

10. Procédé selon l'une des revendications 1 à 9, **caractérisé en ce que** les lamelles (16) sont jointes aux douilles (18, 20, 14) par soudage ou brasage au moyen d'un faisceau laser ou d'un faisceau d'électrons.

11. Procédé selon l'une des revendications 1 à 10, **caractérisé en ce que** les douilles (12, 18, 20, 14) et les lamelles (16) sont constituées d'un matériau métallique réfractaire, en tôle de préférence d'une épaisseur inférieure à 0,5 mm.
